# EUROPEAN PATENT SPECIFICATION

(11) **EP 4 597 388 B1**
(45) Date of publication and mention of the grant of the patent: **15.07.2026**
(21) Application number: 24305183.6
(22) Date of filing: 01.02.2024
(51) Int. Cl.: G06Q 10/0836, G07C 9/00, G07F 17/12

(54) **PARCEL LOCKER BANK SYSTEM WITH BANKS OF LOCKERS WITH REAR SIDE ACCESS**
PAKETSCHLIESSFACHBANKSYSTEM MIT SCHLIESSFACHBANKEN MIT RÜCKSEITIGEM ZUGANG
SYSTÈME DE BANQUE DE CASIERS DE COLIS AVEC DES CASIERS À ACCÈS LATÉRAL ARRIÈRE

(43) Date of publication of application: 06.08.2025
(73) Proprietor: Quadient Technologies France, 92220 Bagneux (FR)
(72) Inventor: POINTEAU, Stéphane, 84300 CAVAILLON (FR)
(74) Representative: Cabinet Beau de Loménie

(56) References cited:
- US-A1- 2020 187 694
- US-A1- 2021 012 279
- US-A1- 2023 115 325

## Description

### FIELD OF THE INVENTION

The present invention relates to systems and methods for dispatching shipments into electronic parcel locker banks including lockable compartments, and for picking-up these shipments thereafter.

### PRIOR ART - BACKGROUND OF THE INVENTION

Parcel locker bank systems are used for dispatching, storing, and picking up various kinds of shipments such as parcels or packages. A parcel locker bank comprises a series of lockers or compartments with different sizes, which are equipped with electronically controlled doors.

These parcel locker bank systems are used by carrier agents or other agents to dispatch shipments, which are then picked-up from the lockers by recipients, i.e., generally customers of businesses sending the shipments. When a shipment is not picked up in due time by the recipient, it needs to be collected by the carrier agents so that the lockers can be accessible for other shipments.

Locker banks are conveniently used in residential apartment complexes or university campuses where shipments and mail are handled by a mailroom clerk or a concierge. Shipments can be delivered to the mailroom clerk, who then dispatches the shipments into the lockers of the bank of lockers.

Usually, the parcel locker bank provides a user interface for the carrier agents and for the recipients. This user interface allows the user to enter information for operating the parcel locker bank and allows the parcel locker bank to provide information back to the user.

Known parcel locker bank systems have several issues. When shipments are dispatched into the different lockers of a bank, the user interface of the parcel locker bank can be monopolized by the carrier agent, thus blocking any recipients from picking-up shipments. For example, during peak hours on university campuses, students may be blocked for a long time if they happen to come to pick-up a shipment at the same time as a carrier agent dispatches all his new shipments (up to 1/2 hour or 1 hour), generating a waiting line of recipients. Providing a solution to allow dispatching and picking-up shipments in parallel would improve the user experience as recipients would not have to wait for the completion of the dispatch session. Another issue is that the architecture of prior art parcel locker bank system results in a time-consuming dispatch process as a new compartment door must be opened for any new shipment to be dispatched in a locker. Also, for tracking purposes, identification means in the form of a barcode label is affixed onto each shipment. The agent must capture the identification of each shipment either by entering it on the touch screen or by scanning the identification means affixed onto the shipment with a barcode reader integrated in the locker bank user interface before dispatching the shipment in a locker of the bank. This means that, after dispatching a shipment in a locker, the carrier agent must come back to the user interface of the locker bank to capture the identification of the next shipment to be dispatched.

### OBJECT AND DEFINITION OF THE INVENTION

A goal of the invention is to provide a parcel locker bank system allowing a carrier agent to dispatch and collect shipments from the lockers of a bank at the same time as some recipients pick up shipments already stored for them in the lockers of the bank.

A first aspect of the invention proposes a parcel locker bank system for dispatching and collecting shipments by an agent, as well as for dropping-off and picking-up of shipments by a user. The parcel locker bank system includes:
- a bank of lockers comprising a front side, a rear side, a control unit, a user interface facing towards the front side of the bank, and several lockers extending each between said front side and said rear side of the bank and each configured to store a shipment, each locker comprising a compartment opened on the rear side of the bank, closed on the front side of the bank by an individual electronically controlled door,
- a remote shipping system comprising a Parcel Handling application and communicating with the bank via a first long-distance communication network, and with a mobile device of the agent via a second long-distance communication network.

In a general aspect of the invention, the compartment of each locker is opened on the rear side of the bank, the bank being designed to give access to its rear side only to the agent while access to its front side is given to both the user and the agent, the control unit is configured to open the doors on the front side of the bank to allow dispatching, collecting, dropping-off and picking-up the shipments, and the parcel handling application is configured to send data to the mobile device of the agent to guide him through the dispatching and collecting of shipments from the rear side and to receive data from the mobile device of the agent to verify that the agent has made no mistake in dispatching and collecting.

The bank of parcel lockers can be installed through a wall of a mailroom so that the locker doors open onto a public area where recipients can pick-up their shipments and the rear side of the locker bank is only accessible from a restricted area of the mailroom. Thus, the agent can have access at the same time to all the lockers from the rear side of the bank while recipients can still access the lockers.

In a first embodiment of the invention, the parcel handling application can be configured to dispatch or collect a first shipment on the rear side of the bank while a second shipment is being picked-up from the front side of the parcel locker bank.

In particular the parcel handling application can be configured to send data to the control unit to allow a customer to pick-up a shipment from the front side of the bank even while an agent is dispatching or collecting shipments from the rear side of the bank.

In a second embodiment of the invention, the parcel handling application can be configured to disable access to the lockers from the front of the bank for a dispatch by a carrier agent or for a drop-off by the user while a shipment is being dispatched in the locker from the rear of the bank, and to disable access to the lockers from the front side of the bank for collecting a shipment by a agent while a shipment is collected from the rear of the bank.

In a third embodiment of the invention, the bank can comprise at least one standard locker equipped with an electronically controlled door attached on the front side of the bank and closed by a rear panel on the rear side of the bank, the standard locker being used for dispatching, collecting, dropping-off and picking-up shipments only from the front side of the bank, the Parcel Handling application being configured to always allow access to the standard locker from the front side of the bank while shipments are being dispatched and or collected from the rear side of the bank.

In a fourth embodiment of the invention, a locker identifier can be attached onto or next to the locker and an identification label of the shipment can be attached to the shipment, the parcel handling application being configured to request and receive from the mobile device of the agent a capture of the identification label and of the locker identifier, to store the capture of the identification label of the shipment in a first memory space of the remote shipping system and store the locker identifier in a second memory space of the remote shipping system, and to associate the first memory space with the second memory space.

In a fifth embodiment of the invention, the mobile device of the agent can comprise or be associated with a scanning component and can be configured to use the scanning component for capturing identification labels and locker identifiers.

In a sixth embodiment of the invention, the parcel handling application can be configured for requesting via an interface of the mobile device an identification of a site of the bank of lockers, an identification of the bank, the identification label of the shipment, the locker identifier associated with the shipment, and for sending the capture of the identification label of the shipment and the capture of the locker identifier.

In a seventh embodiment of the invention, the parcel handling application can be configured to generate an authorization code further to a dispatch of a shipment in the rear side of a locker of the bank, and send the authorization code to the control unit of the bank for storage in a local memory, the control unit being configured to grant access to a user to said locker to pick-up the shipment by comparing the authorization code stored in the local memory with credential provided by the user.

In an eighth embodiment of the invention, the mobile device of the agent can be configured to establish a communication with the remote shipping system and the parcel handling application is configured to exchange in real time with the mobile device of the agent through the first long-distance communication network while shipments are being dispatched and/or collected from the rear side of the bank.

In a ninth embodiment of the invention, the parcel handling application can be configured to store a list of shipments to collect in a memory of the remote shipping system.

In a tenth embodiment of the invention, the bank can comprise:
- a rear-loading column with at least one locker opened on the rear side of the bank,
- a rear-loading control column including the control unit and the user interface and at least one locker opened on the rear side of the bank, and
a standard column with at least one standard locker closed on the rear side of the bank by a rear panel.

In an eleventh embodiment of the invention, the rear side of the bank of lockers is closed by at least one rear-side door, said rear-side door having dimensions allowing to close at least two lockers on the rear side of the bank.

In another aspect of the invention is proposed a method using a parcel locker bank for dispatching, collecting, dropping-off and picking-up shipments, wherein the parcel locker bank has a front side and a rear side and comprises a user interface and at least a locker equipped with an electronically controlled door attached on the front side of the bank and opened on the rear side of the bank to provide access for a dispatch and a collection of a shipment from the rear side of the bank, wherein the parcel locker bank communicates with a remote shipping system via a first long-distance communication network and the remote shipping system communicates with a mobile device via second a long-distance communication network, wherein the parcel locker bank controls a dispatch, a collection, a drop-off or a pick-up on the front side by an agent or a user or a recipient using the user interface for interacting with the lockers bank, and wherein the remote shipping system partially controls the parcel locker bank and manages the dispatch or the collection from the rear side in the compartment by an agent via the mobile device.

In another aspect of the method according to the invention, the method can comprise:
- choosing to dispatch the first shipment from the rear side of the bank using the mobile device as a local interface for the remote shipping system, and
- dispatching the first shipment on the rear side of the parcel locker bank while picking-up a second shipment from the front side of the lockers bank.

In another aspect of the method according to the invention, the method can further comprising disabling access to the locker from the front side of the parcel locker bank for a dispatch by a carrier agent and for a drop-off by a user when dispatching of the shipment from the rear side of the parcel locker bank.

In another aspect of the method according to the invention, the method can further comprise capturing an identification label of the shipment, preferably by scanning the identification with a scanning component integrated with the mobile device.

In another aspect of the method according to the invention, the method can further comprise capturing a locker identifier of the locker, preferably by scanning the compartment identifier with a scanning component integrated with the mobile device.

In another aspect of the method according to the invention, the method can further comprise:
- dispatching on the rear side the shipment in the locker,
- storing the captured identification of the shipment and the captured locker identifier in the remote shipping system, and
- associating the stored identification of the shipment and the stored compartment identifier

In another aspect of the method according to the invention, the method can further comprise
- following the capture of the identification label of the shipment and the capture of the locker identifier, verifying whether a status of the locker is non-acceptable including non-acceptable status being soiled or dysfunctional or opened or full,
- if the status of the locker is not non-acceptable, proposing on the mobile device to dispatch the shipment and store the dispatch, before completing the dispatch of the shipment, and
- if the status of the compartment is non-acceptable, displaying an error on the mobile device.

In another aspect of the method according to the invention, the method can further comprise
- following the dispatch of the shipment, generating by the remote shipping system an authorization code to be used by a user of the shipment for picking-up the shipment from the locker,
- sending the authorization code to the parcel locker bank,
- storing the authorization code in the lockers bank, and
- validating an access request from the user based on the authorization code stored in the parcel locker bank.

In another aspect of the method according to the invention, the method can further comprise
- choosing to collect from the rear side of the bank a first shipment from the locker using the mobile device as a local interface for the remote shipping system, and
- picking-up from the front side of the bank a second shipment of the parcel locker bank while collecting the first shipment from the rear side of the parcel locker bank

In another aspect of the method according to the invention, the method can further comprise disabling access from the front of the parcel locker bank to the locker for a collection by an agent while a shipment is being collected from the rear side of the parcel locker bank.

For each carrier, a list of shipments to be collected is maintained in the remote shipping system and can be used by the agent during the shipments collection process. In another aspect of the method according to the invention, the method can further comprise
- selecting a carrier within a list of carriers displayed on the mobile device and stored in the remote shipping system,
- displaying on the mobile device a list of shipments to collect stored in the remote shipping system and corresponding to the selected carrier,
- capturing the identification label of the shipment to be collected, preferably by scanning the identification label with a scanning component integrated with the mobile device,
- or alternatively capturing the locker identifier, preferably by scanning the compartment identifier with the scanning component,
- removing the shipment from the locker, and
- stopping displaying the shipment in the list of shipments for collection on the mobile device.

In another aspect of the method according to the invention, the method can further comprise:
- generating events related to the dispatch or the collection on the rear side,
   - storing the events in the remote shipping system
- sending the events to the parcel locker bank, and
- storing the events in the parcel locker bank
- for accessing the remote shipping system via his mobile device (420), entering credentials of the agent on the mobile device,
- automatically accessing the remote shipping system,
- selecting a site on the mobile device within a list of sites where the agent operates, and
- selecting a parcel locker bank on the mobile device within a list of parcel locker banks of the site.

The agent may be working on different sites having different parcel locker bank installed - site selection is provided to ease the selection of the parcel locker bank for an agent having access to multiple sites with multiple lockers banks by filtering the multitude of lockers banks with the site.

### BRIEF DESCRIPTION OF THE DRAWINGS

Other aspects, features and advantages of the teachings of the invention will become clearer to those ordinary skilled in the art upon review of the following description in conjunction with the accompanying drawings where:
Figure 1 illustrates a view of a front side of a parcel locker bank suitable for implementing embodiments of the invention;
Figure 2 illustrates a view of a rear side of the parcel locker bank of figure 1;
Figure 3 illustrates a perspective view of the parcel locker bank of figure 1;
Figure 4 illustrates a parcel locker bank system according to the invention for operating multiple locker banks for dispatching, collecting, picking-up and dropping-off shipments;
Figure 5 provides a perspective view of four rear-loading columns of the invention assembled into two pairs of columns;
Figure 6 provides a perspective view of the four rear-loading columns of figure 5 with column doors closed;
Figure 7 illustrates a perspective view of a rear side of a parcel locker bank according to the invention with a rear-loading control column, three rear-loading columns and four standard columns;
Figure 8 illustrates a perspective view of figure 7 with column doors closed;
Figure 9 represents a flow diagram of a method of the invention relative to accessing to a parcel handling application;
Figure 10 represents a flow diagram of a method of the invention relative to dispatching shipments in a parcel locker bank according to the invention;
Figure 11 represents a flow diagram of a method of the invention relative to collecting shipments from a parcel locker bank according to the invention.

### DETAILED DESCRIPTION

In order to allow dispatching and picking-up shipments in parallel, a parcel locker bank according to the invention provides access to shipments stored in the lockers of bank from the front side of the bank for pick-up and drop-off by recipients and provides access to the carrier agent from the rear side of the lockers bank for dispatching or collecting shipments.

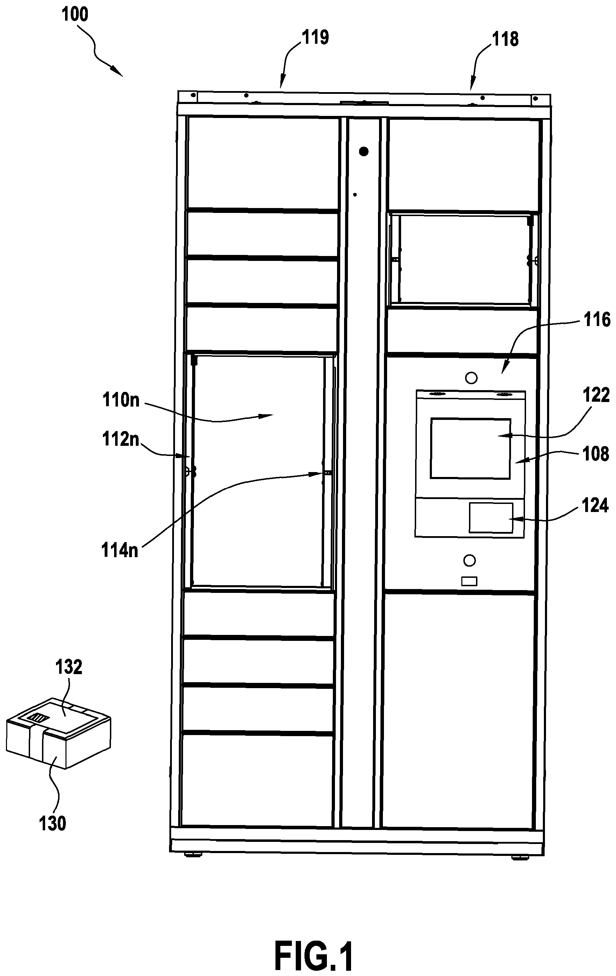

Figure 1 illustrates a view of the front side of a parcel locker bank 100 according to the invention. The parcel locker bank 100 comprises a control unit 116, a user interface 108 and a series of lockers, or compartments, 110n with different sizes.

Each locker 110n comprises an electronically controlled door 112n and an electrical lock 114n fastens or unfastens the door 112n. Preferably, the electrical lock 114n is installed along a side panel of the compartment 110n. Sensors may be provided for each compartment 110n for establishing the status of the electrical lock 114n (locked/unlocked) or the status of the door 112n (opened/closed) or whether the compartment 110n is empty or full. A visual indicator, such as a light emitting diode (LED), may be mounted onto each door 112n or next to each door 112n.

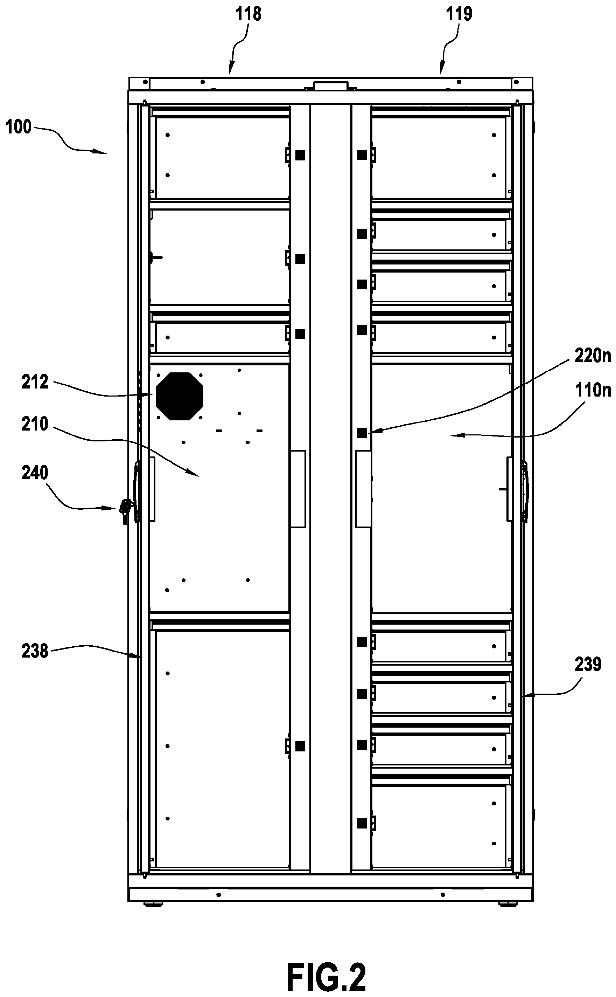

Each locker 110n is opened on the rear side of the bank 100, as illustrated in figure 2, and closed on the front side of the bank 100 as illustrated in figure 1.

The control unit 116 is configured to control the bank 100, for example for indicating which compartment should be used for dispatching or for picking-up a parcel. Preferably, when a door is unlocked, the door automatically opens, thanks for example to a spring mechanism, and therefore indicates which compartment 110n should be used without any need for a visual indicator.

Conveniently, the compartments 110n of a parcel locker bank 100 are assembled in columns with one of the columns including the control unit 116 and the user interface 108. Figure 1 illustrates such an architecture with the bank 100 having two columns: a rear-loading control column 118, including the user interface 108 and the control unit 116, and a rear-loading additional column 119, including only lockers 110n. An objective of these columns is that shipments can be dispatched or collected from their rear side, therefore the naming of rear-loading control column and of rear-loading additional column, which will become clearer with the description of figure 2 below.

The parcel locker bank operation, and in particular the electrical locks 114n for opening or closing of the compartment doors, is controlled by the control unit 116 installed within the parcel locker bank behind the user interface 108. The control unit oversees the communication with the user interface 108, which preferably includes a touchscreen 122 and a barcode reader 124. In simpler configuration, the user interface can be limited to a keypad used to enter information.

When a carrier agent comes for dispatching shipments into parcel locker bank 100, the identification of each shipment 130 must be captured by the parcel locker bank and associated with the compartment where it is dispatched. For tracking purposes, an identification label 132 of the shipment 130, preferably in the form of a barcode printed on label, is affixed onto the shipment 130.

When a carrier agent performs the dispatch from the front side of the parcel locker bank 100, the capture of each shipment identification, i.e. the identification label 132, can be performed with the barcode reader 124 of the user interface 108.

The parcel locker bank system can also be used by a recipient for returning a shipment. The return shipment is then placed by the recipient in a compartment of the parcel locker bank and is collected later by a carrier agent and returned by the carrier. With the development of e-Commerce, there is a growing need for using parcel locker banks for direct sending of shipments. A typical use is for online sales, either for CtoC transactions or for sales from home businesses or small businesses. The sender directly dispatches his shipment in a compartment of a parcel locker bank, without the intervention of a carrier. The shipment is collected later by a carrier agent to bring to the final destination. Shipment drop-off in the form of a return or a direct sending by a user of parcel locker bank is a growing need for the parcel locker bank business.

Figure 2 illustrates a view of the rear side of the bank 100 according to the invention with a rear-loading control column 119 and a rear-loading additional column 118. Each locker 110n is made of two lateral sides and two horizontal top and bottom sides and is closed on the front side with the door 112n, and opened on the rear side of the bank 100. Horizontal top and bottom sides of locker 110n form shelves of a column as the lockers 110n are stacked onto each other. The lateral sides of the lockers are part of vertical side panels of the bank or of internal vertical panels. But each locker 110n has no rear side or rear panel so that it can be freely accessed from the rear side of the bank 100 so that shipments 130 can be dispatched or collected.

Only the space for the control unit 116 and the user interface 108 is protected by a rear panel 210 mounted on the rear-loading control column 119 and comprising a ventilating assembly 212, for cooling the control unit 116 and the user interface 108. Each locker 110n is uniquely identified by a compartment identifier 220n consisting preferably in a barcode associated with a number, which can be easily read by a user. Preferably, access from the rear side can be secured for appropriate personnel by large doors. In the embodiment illustrated in Figure 2, the bank 100 comprises a column door 238 mounted on the rear side of the bank 100 and which can close the rear side of the column 118, and a column door 239 mounted on the rear side of the bank 100 and which can close the rear side of the column 119. Conveniently, each column door 238 and 239 can be locked with a key 240.

The bank 100 according to the invention is particularly appropriate and convenient for university campuses with a mailroom. The lockers bank can be installed through a wall of the mailroom so that the compartment doors open onto a public area where students can pick-up their shipments and the rear side of the lockers bank is accessible from a restricted area of the mailroom. In such an embodiment, the bank does not need column doors on the rear side of the bank as the rear side is only accessible from a restricted room. Carrier agents bring the shipments to the mailroom and the mailroom clerk can then dispatch the shipments 130 from the interior of the mailroom through the rear side of the bank 100. As there are no compartment doors to be opened, the dispatch, as well as the collection, can be performed more efficiently.

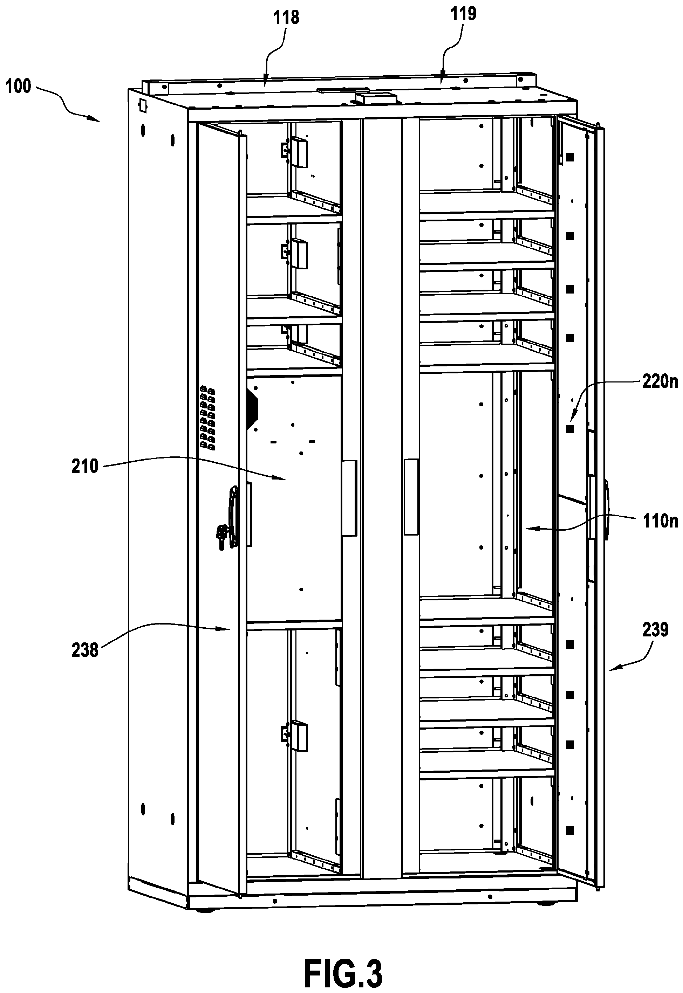

Figure 3 provides a perspective view of the bank 100 of Figures 1 and 2. The column doors 238 and 239 are opened showing the interior of the lockers 110n. The rear-loading control column 119 comprises the control unit 116 and the user interface 108, which are protected by the only rear panel 210. In a particular embodiment of the invention, the compartment identifier 220n is located on the internal side of the column doors.

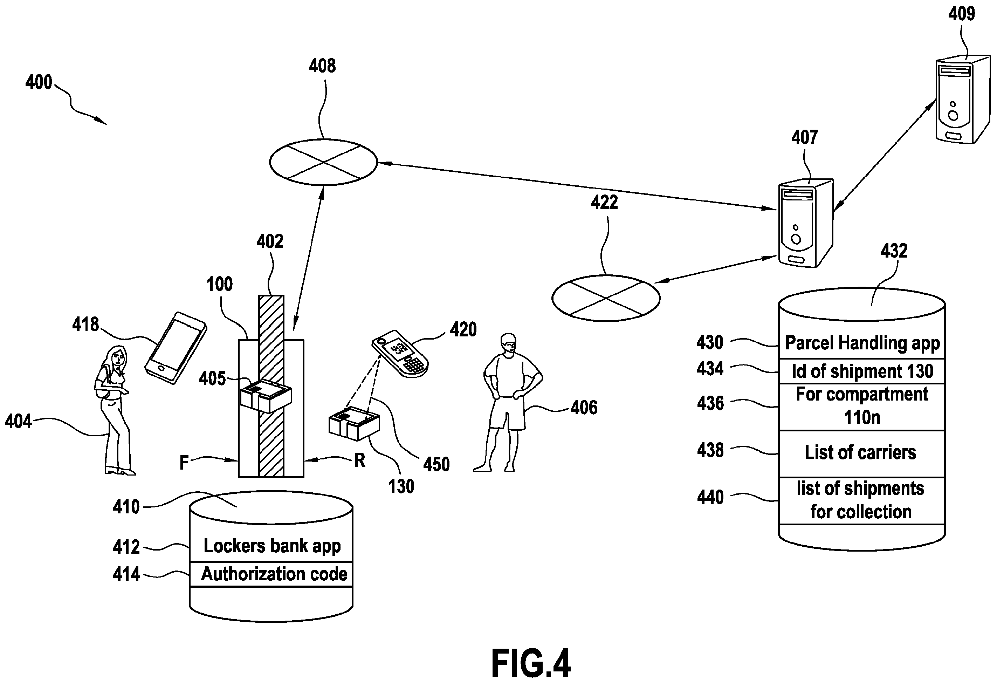

A parcel locker bank 100 according to the invention is recommended when a loading area can be created behind the bank 100, for example in a mailroom. Figure 4 illustrates a parcel locker banks system 400 according to the invention for operating multiple parcel locker banks for dispatching, collecting, dropping-off and picking-up shipments 130.

The parcel locker bank 100 is installed through a wall 402 separating a public area, where a recipient 404 can pick-up a shipment 405, from a restricted area, for example a mailroom, where an agent 406 can dispatch shipments 130 and eventually collect shipments. The parcel locker bank 100 thus has its front side F located in the public area and its rear side R located in the restricted area. The agent 406, who can be a clerk in a university mailroom, a concierge in a residential apartment complex or a carrier agent, has access at the same time to all the compartments 110n from the rear side R of the bank 100. The parcel locker banks system 400 according to the invention comprises, in addition to the bank 100, a remote shipping system 407, which manages authorization access to the bank 100 and data regarding the shipments handled by the bank 100. Data exchange between the bank 100 and the remote shipping system 407 is performed directly via a long-distance communication network 408 based on technologies such as 3G-4G or GSM. Electronic parcel locker bank systems generally comprise a park of lockers banks, all communicating with the remote central system in charge of managing the park of lockers banks. The remote shipping system 407 communicates with a carrier server system 409 and exchanges relative to shipments to be delivered or already delivered in locker banks. Locker banks can be dedicated to a specific carrier. But often they can be used by different carriers. The remote shipping system 407 can then be in communication with as many carrier server systems as the number of carriers using the park of lockers banks managed by the remote shipping system 407.

To pick-up a shipment, the recipient 404 is provided with a recipient code, which he communicates to the control unit 116 of the locker bank 100 for accessing a compartment 110n storing his shipment 130. The control unit 116 comprises a locker bank memory 410 storing a locker bank application 412 designed for operating the locker bank 100. The locker bank application is configured to request the recipient code from the recipient 404, to verify the code provided by the recipient 404 by comparing it with an authorization code 414 stored in the locker bank memory, and to control opening and closing of the different lockers 110n as well as the communication with the remote shipping system 407. The recipient 404 receives the recipient code on a mobile device 418 and enters the recipient code via the user interface 108. Alternatively, the mobile device 418 may be configured for communicating directly with the locker bank 100 via a short distance wireless communication network and for wirelessly providing the recipient code. The locker bank application is also configured to allow an agent to dispatch or collect shipments from the front side F of the bank 100. A carrier agent may choose to dispatch or collect shipments from the public area for example because he does not have access to the restricted area on the rear side R of the bank 100 or prefers not to use the rear side R.

To dispatch and collect shipments 130 from the rear side of the locker bank 100, the agent uses a mobile device 420, which can be a smartphone or a personal digital assistant (PDA) or an iPad or any computerized mobile device having some long-distance communication capabilities compatible with the long-distance communication capabilities of the remote shipping system 407. The mobile device 420 communicates with a remote shipping system 407 via a long-distance communication network 422 based on technologies such as 3G-4G or GSM, and which can be the same as the long-distance communication network 408. A Parcel Handling application 430 is installed on the remote shipping system 407 and is stored in a memory system 432 of the remote shipping system 407. The Parcel Handling application 430 is developed by the locker bank provider for managing the dispatch or collection of shipments via the rear side of the locker bank 100 and can be provided in the form of a web portal. The mobile device 420 of the agent 406 is configured for establishing a communication with the Parcel Handling application 430 during shipments dispatch or collection from the rear of the bank 100. A secured link for accessing the Parcel Handling application must be installed on the mobile device 420 and used by the agent for a dispatch or a collection of a shipment. The secured link, which can be a URL using the secured protocol HyperText Transfer Protocol Secure (HTTPS), is provided by the locker bank provider, and is preferably secured by a user login and a user password for limiting access to the Parcel Handling application. When the agent wants to dispatch or collect the shipment 130 in the locker 110n, he must first have his mobile device 420 accessing the Parcel Handling application 430 via the secured link. A communication session is opened between the mobile device 420 and the remote shipping system 407 and continuous exchanges are possible. Once the communication between the mobile device 420 and the Parcel Handling application 430 is established, the agent continues using the mobile device 420 as a local interface for the Parcel Handling application 430 during the whole dispatch process or a collection process. The session remains open during the whole dispatch process or a collection process, and may be terminated once a delay without activity is reached - the delay without activity being set at 1 or 2 hours for example. Once the agent has initiated a dispatch process or a collection process, the whole process is managed by the Parcel Handling application running on the remote shipping server 407 and exchanging with the mobile device 420 and with the agent 406 via the user interface of the mobile device 420.

When a shipment is dispatched or collected from the rear of the parcel locker bank 100, accessing the lockers from the front side at the same time may generate some difficulties. For example, when a carrier agent 406 interacts with the user interface 108 of the bank 100 for dispatching a shipment 130 from the front side of the bank, the control unit 116 opens an empty compartment, i.e. an empty locker 110n, and at the same time the agent 406 may decide to dispatch from the rear side a shipment 130 in the same compartment. Such occurrence may result in two shipments for different recipients being in the same compartment or complex errors to be solved. The technical solution for preventing such an issue is to have the Parcel Handling application 430 configured for disabling access from the front side of the bank 100 for a carrier agent 105 or a user (recipient or sender) 404 depending on the processes being performed with the parcel locker bank, when a shipment is being dispatched or collected from the rear of the parcel locker bank 100.

During a dispatch process from the rear side of the parcel locker bank, the Parcel Handling application 430 is configured to disable any access from the front side of the parcel locker bank 100 for a dispatch by a carrier agent 406 and for a drop-off by a user 404 (recipient or sender). During a collection process from the rear side of the parcel locker bank, the Parcel Handling application 430 is configured to disable access from the front side of the parcel locker bank for a collection by a carrier agent 406. As soon as a dispatch process or a collection process is initiated from the rear side of the parcel locker bank 100, the Parcel Handling application 430 sends a specific disabling message to the control unit 116 of the parcel locker bank 100 to block any inappropriate process relative to operations from the front side of the parcel locker bank. Thus, for a dispatch process from the rear side, the control unit 116 blocks any dispatch process and drop-off process from the front side. And, for a collection process from the rear side, the control unit 116 blocks any collection process from the front side. Therefore, when a shipment 130 is dispatched or collected from the rear side of the parcel locker bank 100, a user can still pick-up shipments from the front side of the parcel locker bank 100, but not drop-off a shipment, nor can another agent dispatch or collect shipments from the front side. In other words, the control unit 116 does not block a request for a pick-up made via the user interface 108.

More generally, the Parcel Handling application 430 can send command messages to the control unit 116 and perform some control on the parcel locker bank 100 such as blocking access to soiled or dysfunctional compartments, blocking access to a shipment for recipients and limiting access to restricted personnel or changing access rules.

The Parcel Handling application 430 is configured to request, via the interface of the mobile device 420, information related to the dispatch or collection including the selected process, an identification of the site where the parcel locker bank 100 is installed, an identification of the parcel locker bank 100, an identification of the shipment 130 captured during a dispatch or a collection, a compartment identifier 220n captured during a dispatch or a collection or the carrier identification, so that an exact status of the parcel locker bank 100 can be maintained in the remote shipping system 407. Identification of the site may be redundant if it is included in the identification of the parcel locker bank, and it may not be used. Similarly, the carrier identification may be redundant if it is included in the identification of the shipment, and it may not be used. The Parcel Handling application 430 generates events associated with this information related to the dispatch or collection and with the interactions of the agent 406 with the Parcel Handling application 430 during the dispatch or collection, and stores these events in the memory system 432. Then, these events are provided to the parcel locker bank 100 by the Parcel Handling application 430 and stored in the parcel locker bank memory 410 so that an exact status of the parcel locker bank 100 can be maintained in the parcel locker bank memory 410 and so that the parcel locker bank application 410 is able to manage and control the parcel locker bank operation. All events generated during the dispatch or collection by the Parcel Handling application 430 and stored in the remote shipping system 407 are synchronized with parcel locker bank 100 for both parcel locker bank and remote shipping system to have the same information about parcels handled by the lockers bank.

For a dispatch process, the Parcel Handling application is configured for requesting the capture of the identification 132 of the shipment 130 and of the compartment identifier 220n so that the shipment 130 can be associated with the compartment 110n in which it is dispatched. The captured identification 132 of the shipment 130 and the compartment identifier 220n are communicated to the Parcel Handling application 430 and the identification of the shipment is stored in a memory 434 of the memory system 432 and associated, based on the received compartment identifier 220n, with a memory 436 of the memory system 432 identifying the compartment 110n. In a preferred embodiment, a scanning component 450 is integrated with the mobile device 420 so that the agent 406 can scan the identification 132 of the shipment 130 and the compartment identifier 220n. The scanning component 450 can be a dedicated internal scanner hardware integrated in the mobile device 420 or a camera installed in the mobile device 420, such as a camera in a smartphone, or an external handheld scanner connected to the mobile device 420, such as a handheld scanner connected to an iPad.

For a collection process, the Parcel Handling application is configured to request selecting a carrier corresponding to shipments to be collected. A list of carriers 438 authorized to use the parcel locker bank 100 is stored in the memory system 432. For each carrier of the list of authorized carriers, the Parcel Handling application 430 maintains a list of shipments 130 to collect stored in the memory system 432. As an illustration, a memory 440 of the memory system 432 stores a list of shipments to collect for a carrier of the list of authorized carriers.

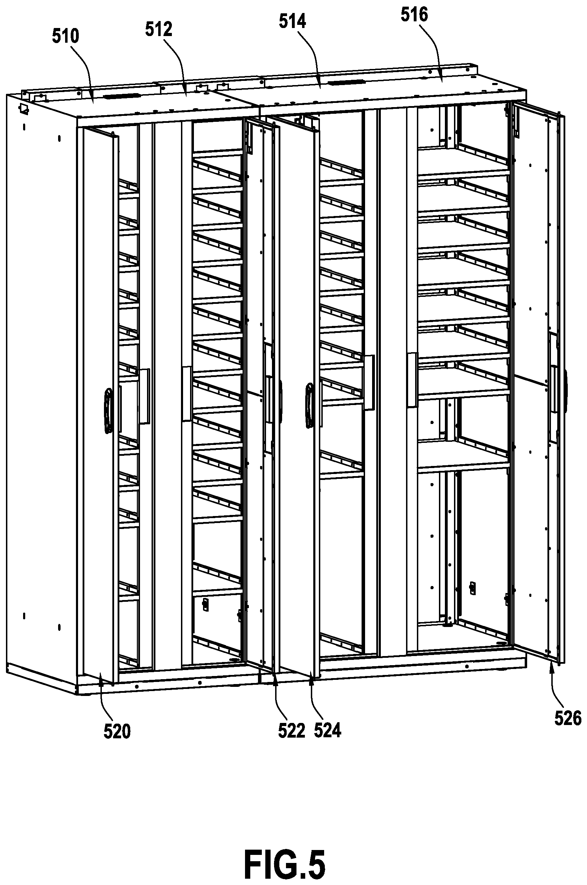

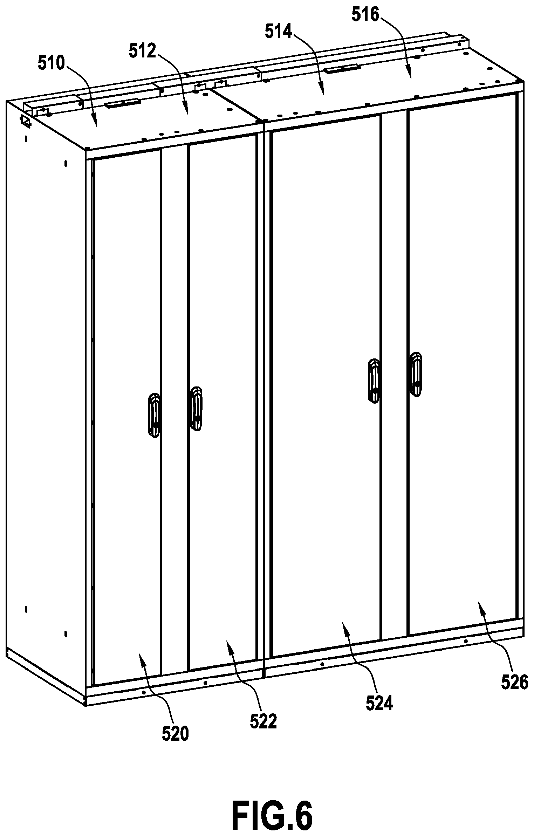

As illustrated in figure 1, a parcel locker bank 100 of the invention includes preferably a rear-loading control column 118 comprising the control unit 116 and the user interface 108 and some compartments 110n, and rear-loading additional columns 119 comprising only compartments 110n. Conveniently, rear-loading additional columns 119 can be assembled in at least one pair of columns. Figure 5 provides a perspective view of four rear-loading additional columns 510, 512, 514, 516 according to the invention assembled into two pairs of columns. Two thinner rear-loading additional columns 510 and 512 are assembled into a thinner two column cupboard. Two wider rear-loading additional columns 514 and 516 are assembled into a wider two column cupboard. These rear-loading additional columns are displayed with their column doors 520, 522, 5224 and 526 opened. Rear-loading additional columns 510 to 516 can be assembled with a rear-loading control column 118 such as the one illustrated in Figure 1 and connected with the control unit 118 of the rear-loading control column 118 either with electrical wires or with wireless connections. Figure 6 provides a perspective view of the four rear-loading additional columns 510 to 516 assembled into two pairs of columns with their column doors 520, 522, 5224 and 526 closed.

According to an embodiment of the invention, standard additional columns 720, 722, 724, 726, i.e., columns of standard compartments 730n without rear access (with a rear panel blocking access to the compartments from the rear side), can be assembled with a rear-loading control column 118 in a similar manner as for the rear-loading additional columns 119.

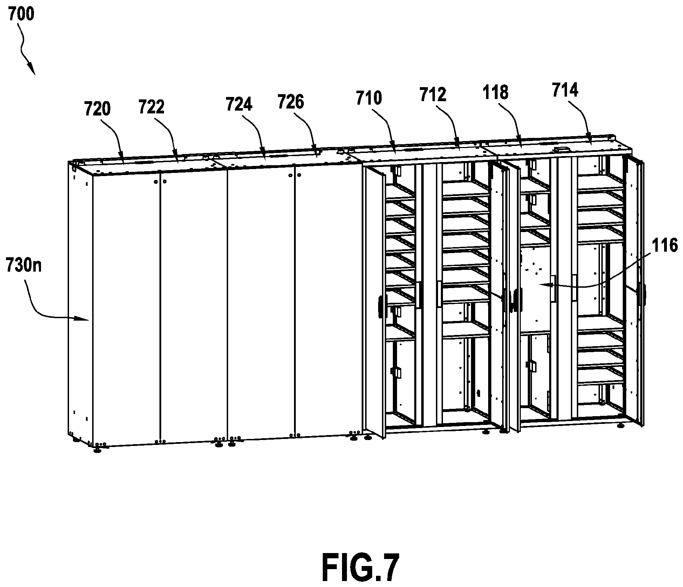

Figure 7 illustrates a perspective view of the rear side of a parcel locker bank 700 of the invention constituted of the rear-loading control column 118 assembled with three rear-loading additional columns 710, 712, 714, and with four standard additional columns 720, 722, 724 and 726. Each of the three rear-loading additional columns 710, 712, 714 and each of the four standard additional columns 720 to 726 is controlled by the control unit 116 of the rear-loading control column 118 and is connected with the control unit 116 either with electrical wires or with wireless connections.

When an agent 406 dispatches or collects a shipment 130 from the rear side of the parcel locker bank 100 or 700, the Parcel Handling application 430 is configured to disable any access from the front side of the parcel locker bank 100 for a carrier agent or a user (recipient or sender) to compartments of the rear-loading additional columns 710, 712 and 714 and to compartments of the rear-loading control column 118. However, a dispatch from the front of the parcel locker bank 700 into the standard additional columns 720, 722, 724 and 726 is not disabled, and a carrier agent can dispatch shipments 130 in any of the standard additional columns 720 to 726 at the same time as the agent 406 dispatches shipments 130 from the rear side of the parcel locker bank 700 into the rear-loading additional columns 710 to 716.

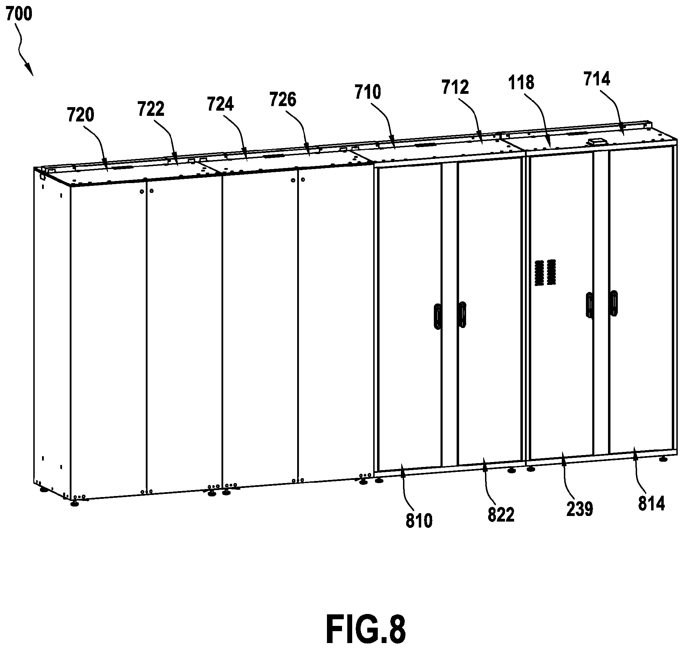

Figure 8 illustrates a perspective view of the rear side of the parcel locker bank 700 with column doors 239, 810, 812, 814. In particular, Figure 8 illustrates a parcel locker bank 700 where a column door 239 of the rear-loading control column 118 and each column door 810, 812, 814 of each of the three rear-loading additional columns 710, 712, 714 are closed. Such a mixed parcel locker bank configuration can by useful for example when the restricted area available for rear-loading the parcel locker bank is limited. The segment of the parcel locker bank constituted of the rear-loading control column 118 and the rear-loading additional columns 710, 712, 714 can be installed through a wall corresponding to the limited restricted area, and the segment of the parcel locker bank 700 comprising the standard additional columns (corresponding to 720, 722, 724 and 726 on figure 8) can be installed as an extension beyond the limited restricted area for supplementary storage capacity.

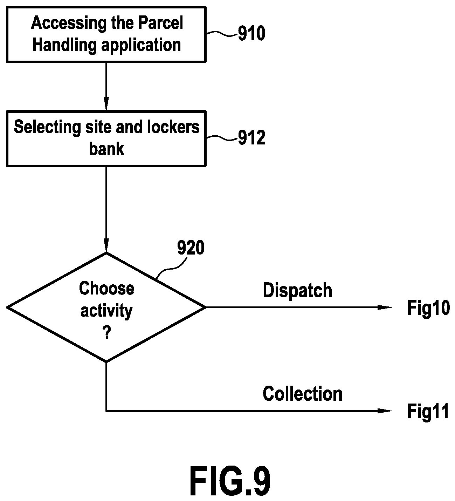

A method according to the invention using the parcel locker banks system 400 including eventually a mixed parcel locker bank 700 is now described in reference to figure 9. To perform a dispatch process or a collection process from the rear side of a parcel locker bank 100 or 700, the agent 406 must first access the Parcel Handling application 430 via his mobile device 420. In step 910, the agent uses the mobile phone 420 to request access to the Parcel Handling application 430 and enters on the mobile device 420 his credentials, typically a login identification and a password. In a preferred embodiment, the mobile device 420 is dedicated for operating the parcel locker bank 100 or 700 from its rear side and may have been provided by the parcel locker bank provider. When the mobile device 420 is switched on, it automatically requests access to the Parcel Handling application 430, using for example a secured URL address of the Parcel Handling application running as a web portal on the remote shipping system 407. In another embodiment, the mobile device 420 is not dedicated to operating the parcel locker bank 100 or 700 and using the Parcel Handling application 430 to operate the parcel locker bank 100 or 700 is only one of the applications of the mobile device 420. The agent 406 can enter or select on the mobile device 420 a secured URL address of the Parcel Handling application running as a web portal on the remote shipping system 407. Once having accessed the Parcel Handling application 430, in step 912, at the request of the Parcel Handling application 430, via the interface of the mobile device 420, the agent selects the site where he operates and selects the parcel locker bank, which he wants to access. The agent may be working on different sites having different parcel locker bank installed. If the agent works on only one site and/or operates on only one parcel locker bank, no selection is requested. The site selection is provided to ease the selection of the parcel locker bank for an agent having access to multiple sites with multiple locker banks by filtering the multitude of parcel locker banks with the site. However, this selection may not be provided. In step 920, the agent is requested by the Parcel Handling application 430 via the mobile device 420, to specify which activity he wishes to carry out.

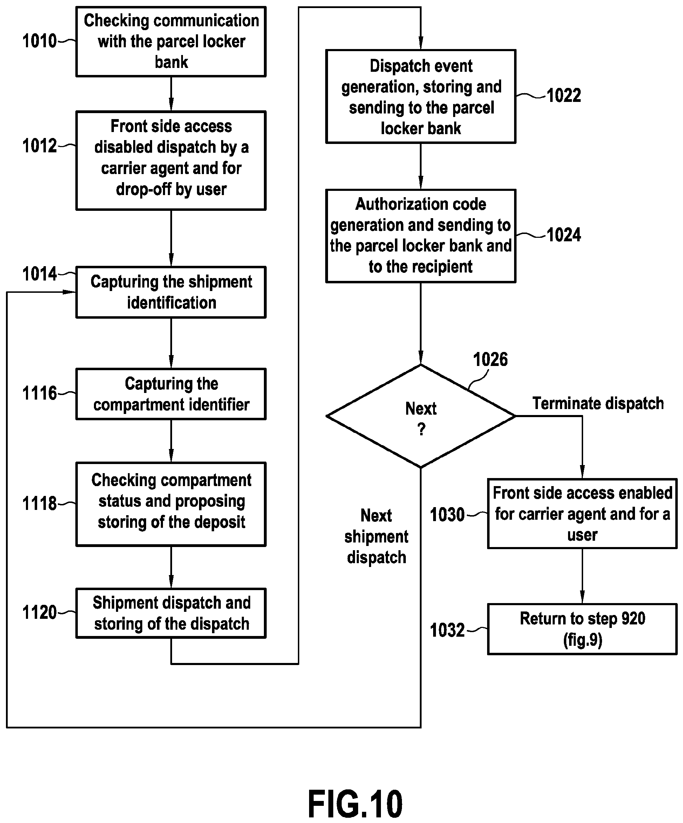

If the agent 406 chooses in step 920 the activity of dispatching shipments into the parcel locker bank, he can carry on according to a method illustrated with figure 10 using the mobile device 420 as a local interface for the Parcel Handling application 430 during the whole dispatch process.

In step 1010, the Parcel Handling application checks that the long-distance communication network 422 is operational and that communication with the parcel locker bank is operational otherwise the dispatch process is blocked until communication between the Parcel Handling application 430 and the parcel locker bank 100 or 700 is operational. Communication with the parcel locker bank is required for the Parcel Handling application 430 to be able to deny access to a carrier agent to the front side of the rear-loading control column 118 and of the rear-loading additional columns of the parcel locker bank, and for the Parcel Handling application 430 to be able to synchronize the events generated during the dispatch with the parcel locker bank. This verification is preferable when starting the dispatch process but can be performed later during the dispatch process.

In step 1012, the Parcel Handling application 430 disables access from the front side of the parcel locker bank to compartments of the rear-loading control column 118 and of the rear-loading additional columns 119 for a carrier agent for a dispatch by a carrier agent and for a drop-off by a user (return by a recipient or sending by a sender). Access on the front side of the parcel locker bank is not disabled for a pick-up by a recipient and a recipient can pick-up his shipment during the whole dispatch process on the rear side.

In step 1014, at the request of the Parcel Handling application, the agent captures the identification 132 of the shipment 130. In a preferred embodiment, the agent scans the identification 132 with the scanning component 450 integrated with the mobile device 420. In another embodiment, the agent enters the identification 132 on the user interface of the mobile device 420.

In step 1016, at the request of the Parcel Handling application, the agent captures the compartment identifier 220n of the compartment 110n that he chooses in the parcel locker bank for dispatching the shipment 130. In a preferred embodiment, the agent scans the compartment identifier 220n with the scanning component 450 integrated with the mobile device 420. In another embodiment, the agent enters the compartment identifier 220n on the user interface of the mobile device 420.

In step 1018, the Parcel Handling application acknowledges the capture of the compartment identifier 220n and performs multiple verifications on the status of the compartment 110n for allowing the dispatch including whether the compartment 110n is soiled, dysfunctional (for example the electrical lock 114n or a sensor of the compartment 110n does not function), opened (door 112n is opened) or full (logs in the memory system 432 indicates that a shipment is already stored in the compartment 110n), which would result in a non-approval for the dispatch and an error message. If the dispatch is approved, the Parcel Handling application proposes the storing of the dispatch.

In step 1020, the agent dispatches the shipment 130 in the compartment 110n and activates the storing of the dispatch. At the same time, a recipient could have picked-up a second shipment 405 from the front side because the access on the front side of the parcel locker bank is not disabled for a pick-up. The Parcel Handling application stores the captured identification of the shipment 130 and the captured compartment identifier 220n in the memory system 432 and performs an association of the captured identification of the shipment 130 and of the captured compartment identifier 220n, which is also stored in the memory system 432.

In step 1022, the Parcel Handling application 430 generates events related to the dispatch and stores these events in the memory system 432. Then, the Parcel Handling application provides to the parcel locker bank these events, which are stored in the parcel locker bank memory 410.

In step 1024, the Parcel Handling application 430 generates an authorization code for the recipient to be able later to pick-up the shipment 130 from the compartment 110n. The Parcel Handling application 430 sends the authorization code to the parcel locker bank 100 to be stored in the parcel locker bank memory 410 as the authorization code 414. In parallel, the Parcel Handling application 430 must also send to the recipient the authorization code, therefore called recipient code. The Parcel Handling application 430 may send the recipient code, to the carrier server system 409 because the carrier has a recipient contact information and is generally responsible for providing the recipient with the recipient code. Alternatively, if the parcel locker bank provider has a recipient contact information, which can be stored in the memory system 432, the Parcel Handling application sends the recipient code directly to the recipient, for example by mail and/or by SMS.

In step 1026, the Parcel Handling application proposes the possibilities for another shipment dispatch or for terminating the dispatch process. If the agent chooses to dispatch another shipment, the dispatch process resumes in step 1014 where, at the request of the Parcel Handling application, the agent captures the identification of another shipment.

If the agent chooses to terminate the dispatch process, the dispatch process proceeds in step 1030, the Parcel Handling application enables access from the front side of the parcel locker bank to compartments of the rear-loading control column 118 and of the rear-loading additional columns for a carrier agent and for a user (recipient or sender).

In step 1032, the Parcel Handling application resumes in step 920, where the agent is requested by the Parcel Handling application which activity he wishes to carry out.

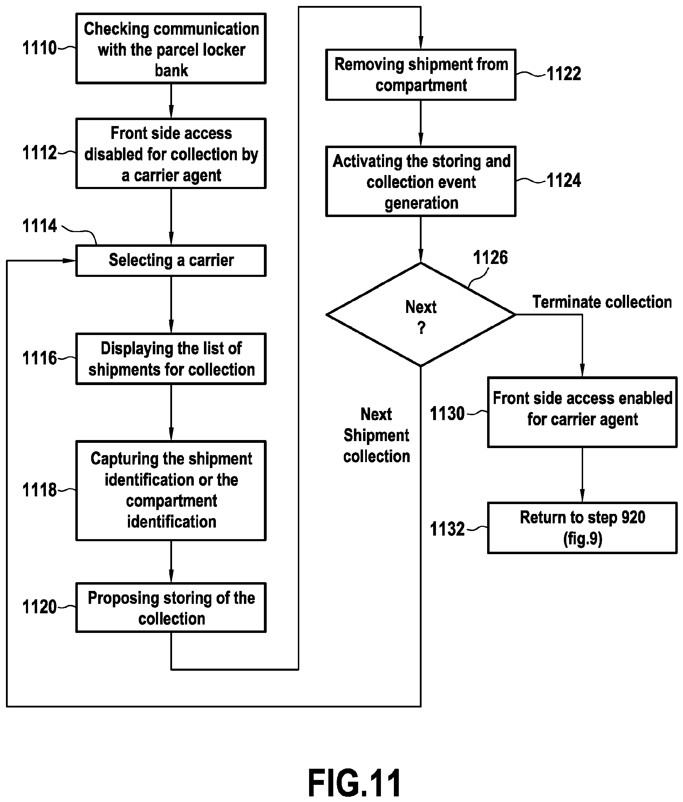

If the agent 406 chooses in step 920 the activity of collecting shipments from the parcel locker bank, he can carry on according to a method illustrated with figure 11 using the mobile device 420 as a local interface for the Parcel Handling application 430 during the whole collection process.

In step 1110, the Parcel Handling application checks that the long-distance communication network 422 is operational and that communication with the parcel locker bank is operational otherwise the collection process is blocked until communication between the Parcel Handling application and the parcel locker bank is operational. Communication with the parcel locker bank is required for the Parcel Handling application to be able to disable for a carrier agent access from the front side of the parcel locker bank to compartments of the rear-loading control column 118 and to compartments of the rear-loading additional columns and for the Parcel Handling application to be able to synchronize the events generated during the collection with the parcel locker bank. This check is preferable when starting the collection process but can be performed later during the collection process.

In step 1112, the Parcel Handling application disables access from the front side of the parcel locker bank to compartments of the rear-loading control column 118 and to compartments of the rear-loading additional columns for a collection by a carrier agent. Access on the front side of the parcel locker bank is not disabled for a pick-up by a recipient and a recipient can pick-up his shipment during the whole collection process on the rear side.

In step 1114, at the request of the Parcel Handling application, the agent selects a carrier within the list of carriers 438 stored in the memory system 432 and proposed by the Parcel Handling application. A list of shipments for collection corresponds to each carrier. Based on this list, the agent can collect and group all the shipments for collection for that particular carrier, so that it can be handled as a group by that carrier.

In step 1116, the Parcel Handling application displays a list of shipments for collection stored in the memory 440 and corresponding to the selected carrier.

In step 1118, at the request of the Parcel Handling application, the agent captures the identification 132 of the shipment 130 that he needs to collect. In a preferred embodiment, the agent scans the identification 132 with the scanning component 450 integrated with the mobile device 420. In another embodiment, the agent enters the identification 132 on the user interface of the mobile device 420. The Parcel Handling application can also propose as an alternative the capture of the compartment identifier 220n of the compartment 110n where the shipment 130 is stored. The agent can then capture the compartment identifier 220n of the compartment. In a preferred embodiment, the agent scans the compartment identifier 220n with the scanning component 450 integrated with the mobile device 420. In another embodiment, the agent enters the compartment identifier 220n on the user interface of the mobile device 420. Only either the capture of the identification 132 of the shipment or the capture of the compartment identifier 220n is required as these two pieces of information have been associated during the dispatch process.

In step 1120, the Parcel Handling application acknowledges the capture of the identification 132 or of the compartment identifier 220n and proposes the storing of the collection.

In step 1122, the agent removes the shipment 130 from the compartment. As the access from the front side of the parcel locker bank is not disabled for a pick-up, a recipient of the shipment 130 can pick-up the shipment 130 from the front side. If the recipient tries at the same time to pick-up the parcel 130 from the compartment 110n, the agent lets the receiver pick-up the parcel and resumes in step 1116 if he wants to collect another shipment or proceeds to step 1130 if he wishes to terminate the collection process. Following on the pick-up of the shipment 130 by the recipient, the shipment 130 is not displayed anymore by the Parcel Handling application in the list of shipments for collection.

In step 1124, the agent activates the storing of the collection. The Parcel Handling application 430 removes the collected shipment 130 from the list of shipments for collection stored in the memory 440 or attributes a collected status to the shipment, and generates an event related to the collection, and stores the event in the memory system 432. Then, the Parcel Handling application provides to the parcel locker bank this event, which is stored in the parcel locker bank memory 410.

In step 1126, the Parcel Handling application proposes the possibilities for another shipment collection or for terminating the collection process. If the agent chooses to collect another shipment for the same selected carrier, the collection process resumes in step 1116 where the Parcel Handling application displays the list of shipments for collection and corresponding to the selected carrier (without the shipment 130 just collected). If the agent chooses to collect another shipment for a different carrier than the selected carrier, the collection process resumes in step 1114 where, at the request of the Parcel Handling application, the agent selects a carrier.

If the agent chooses to terminate the collection process, the collection process proceeds in step 1130, the Parcel Handling application enables access from the front side of the parcel locker bank to compartments of the rear-loading control column 118 and of the rear-loading additional columns for a carrier agent.

In step 1032, the Parcel Handling application resumes in step 920, where the agent is requested by the Parcel Handling application which activity he wishes to carry out.

## Claims

1. A parcel locker bank system for dispatching and collecting shipments (130) by an agent (406), such as a carrier agent, as well as for the dropping-off and picking-up of shipments (130, 405) by a user (404), the parcel locker bank system including:
a bank (100, 700) of lockers (110n) comprising a front side, a rear side, a control unit (116), a user interface (108) facing towards the front side of the bank (100, 700), and several lockers (110n) extending each between said front side and said rear side of the bank (100, 700) and each configured to store a shipment (130), each locker (110n) comprising a compartment opened on the rear side of the bank (100, 700), closed on the front side of the bank (100, 700) by an individual electronically controlled door (112n),
a remote shipping system (407) comprising a Parcel Handling application (430) and communicating with the bank (100, 700) via a first long-distance communication network (408), and with a mobile device (420) of the agent via a second long-distance communication network (422),
the compartment of each locker (110n) is opened on the rear side of the bank (100, 700) and the rear side of the locker bank is only accessible from a restricted area of a mailroom, the bank (100, 700) being designed to give access to its rear side only to the agent while access to its front side is given to both the user and the agent,
in that the control unit (116) is configured to open the doors (112n) on the front side of the bank to allow dispatching, collecting, dropping-off and picking-up the shipments (130, 405), and
the Parcel Handling application (430) is configured:
- to send data to the mobile device (420) of the agent to guide him through the dispatching and collecting of shipments (130) from the rear side and
- to receive data from the mobile device (420) of the agent to verify that the agent has made no mistake in dispatching and collecting via an exchange in real time with the mobile device (420) of the agent (406) through the first long-distance communication network while shipments (130) are being dispatched and/or collected from the rear side of the bank (100, 700), and
- to, upon initiation of a dispatch or collection process from the rear side of the bank (100, 700)
• establish and maintain an open communication session between the mobile device (420) of the agent (406) and the remote shipping system (407) throughout the duration of said dispatch or collection process, and
• send a disabling message to the control unit (116) to block access from the front side of the bank (100, 700) for a dispatch or a collection by an agent (406) or for a drop-off by a user (404), while permitting a pick-up of a shipment by a user (404).

2. The parcel locker bank system according to claim 1, wherein the Parcel Handling application is configured for the dispatch or the collection of a first shipment (130) on the rear side of the bank (100, 700) during a pick-up of a second shipment (405) from the front side of the parcel locker bank.

3. The parcel locker bank system according to any of claims 1 or 2, wherein the Parcel Handling application is configured to disable access to the lockers (110n) from the front of the bank for a dispatch by a carrier agent or for a drop-off by the user while a shipment (130) is being dispatched in the locker from the rear of the bank, and to disable access to the lockers (110n) from the front side of the bank for a collection of a shipment by a carrier agent while a shipment (130) is being collected from the rear of the bank.

4. The parcel locker bank system according to any one of claims 1 to 3, wherein the bank (100, 700) comprises at least one standard locker (730n) equipped with an electronically controlled door (112n) attached on the front side of the bank (100, 700) and closed by a rear panel on the rear side of the bank (100, 700), the standard locker being used for dispatching, collecting, dropping-off and picking-up shipments only from the front side of the bank (100, 700), the Parcel Handling application (130) being configured to always allow access to the standard locker (730n) from the front side of the bank while shipments (130) are being dispatched and or collected from the rear side of the bank (100, 700).

5. The parcel locker bank system according to any one of claims 1 to 4, wherein a locker identifier (220n) is attached onto or next to the locker (110n) and an identification label (132) of the shipment (130) is attached to the shipment (130), the Parcel Handling application being configured to request and receive from the mobile device (420) of the agent a capture of the identification label (132) and of the locker identifier (220n), to store the capture of the identification label (132) of the shipment in a first memory space (434) of the remote shipping system (407) and store the locker identifier (220n) in a second memory space (436) of the remote shipping system (407), and to associate the first memory space (434) with the second memory space (436), the mobile device (420) of the agent comprising or being associated with a scanning component (450) and is configured to use the scanning component for capturing identification labels (132) and locker identifiers (220n).

6. The parcel locker bank system according to any one of claims 1 to 5, wherein the Parcel Handling application (430) is configured to generate an authorization code (414) further to a dispatch of a shipment (130) in the rear side of a locker (110n) of the bank (100, 700), and send the authorization code to the control unit (106) of the bank (100, 700) for storage in a local memory (410), the control unit (106) being configured to grant access to a user (404) to said locker (110n) to pick-up the shipment (130, 405) by comparing the authorization code stored in the local memory with credential provided by the user.

7. The parcel locker bank system according to any one of claims 1 to 6, wherein the mobile device (420) of the agent (406) is configured to establish a communication with the remote shipping system (407).

8. The parcel locker bank system according to any one of claims 4 to 7, wherein the bank (100, 700) comprises:
- a rear-loading column (119, 710, 712, 714) with at least one locker opened on the rear side of the bank (100, 700),
- a rear-loading control column (118) including the control unit (116) and the user interface (108) and at least one locker (110n) opened on the rear side of the bank (100, 700), and
- a standard column (720, 722, 724, 726) with at least one standard locker closed on the rear side of the bank (100, 700) by a rear panel,
the rear side of the bank (100, 700) of lockers being closed by at least one rear-side door, said rear-side door having dimensions allowing to close at least two lockers on the rear side of the bank (100, 700).

9. A method using a parcel locker bank (100, 700) for dispatching, collecting, dropping-off and picking-up shipments (130), wherein the parcel locker bank (100, 700) has a front side and a rear side and comprises a user interface (108) and at least a locker (110n) equipped with an electronically controlled door (112n) attached on the front side of the bank and opened on the rear side of the bank to provide access for dispatching and a collecting shipments (130) from the rear side of the bank, wherein the parcel locker bank (100, 700) communicates with a remote shipping system (407) via a first long-distance communication network (408) and the remote shipping system (407) communicates with a mobile device (420) via second a long-distance communication network (422), wherein the parcel locker bank (100, 700) controls a dispatch, a collection, a drop-off or a pick-up on the front side by an agent or a user using the user interface (108) for interacting with the lockers (110n) of the bank, and wherein the remote shipping system (407) partially controls the parcel locker bank and manages the dispatch or the collection from the rear side of the bank by an agent (406) via the mobile device, the method further comprising:
- establishing and maintaining, by the Parcel Handling application (430), an open communication session with the mobile device (420) during the duration of a dispatch or collection process from the rear side, and
- sending, by the Parcel Handling application (430) to the control unit (116), a disabling message to block access from the front side for a dispatch or a drop-off, while permitting a pick-up by a user during said process.

10. The method according to claim 9, the method comprising:
- choosing to dispatch the first shipment (130) from the rear side of the bank using the mobile device (420) as a local interface for the remote shipping system (407), and
- dispatching the first shipment (130) on the rear side of the parcel locker bank while picking-up a second shipment (405) from the front side of the parcel locker bank.

11. The method according to claim 10, further comprising disabling access to the locker (110n) from the front side of the parcel locker bank for a dispatch by a carrier agent (406) and for a drop-off by a user (404) when dispatching the shipment (130) from the rear side of the parcel locker bank.

12. The method according to claims 10 or 11, further comprising:
- capturing an identification label (132) of the shipment (130), and
- capturing a locker identifier (220n) of the locker (110n)
- dispatching, from the rear side of the bank, the shipment (130) in the locker (110n),
- storing the captured identification label (132) of the shipment (130) and the captured locker identifier (220n) in the remote shipping system (407),
- associating the stored identification label (132) of the shipment (130) and the stored compartment identifier (220n),
- following the capture of the identification (132) of the shipment (130) and the capture of the locker identifier (220n), verifying whether a status of the locker 110n is non-acceptable, including non-acceptable status for being soiled or dysfunctional or opened or full,
- if the status of the locker is not non-acceptable, proposing on the mobile device (420) to dispatch the shipment (130) and store the dispatch, before completing the dispatch of the shipment (130), and
- if the status of the compartment is non-acceptable, displaying an error on the mobile device (420).

13. The method according to any one of claims 9 to 12, further comprising:
- following on the dispatch of the shipment (130), generating by the remote shipping system an authorization code (414) to be used by a recipient of the shipment (130) for picking-up the shipment from the compartment (110n),
- sending the authorization code to the parcel locker bank,
- storing the authorization code in the parcel locker bank, and
- validating an access request from the user based on the authorization code stored in the parcel locker bank.

14. The method according to any one of claims 9 to 13, further comprising:
- choosing to collect from the rear side of the bank a first shipment (130) from the locker (110n) using the mobile device (420) as a local interface for the remote shipping system (407), and
- picking-up from the front side of the bank a second shipment (130, 405) of the parcel locker bank while collecting the first shipment (130) from the rear side of the parcel locker bank.
- disabling access from the front of the parcel locker bank to the compartment (110n) for a collection by an agent during a collection of a shipment (130) from the rear side of the parcel locker bank.

15. The method according to claim 13 or 14, further comprising:
- selecting a carrier within a list of carriers (438) displayed on the mobile device (420) and stored in the remote shipping system (407),
- displaying on the mobile device (420) a list of shipments to collect (440) stored in the remote shipping system (407) and corresponding to the selected carrier,
- capturing the identification label (132) of the shipment (130) to be collected,
- or alternatively capturing the locker identifier (220n),
- removing the shipment (130) from the compartment (110n), and
- stopping displaying the shipment in the list of shipments for collection on the mobile device (420).

## Patentansprüche

1. Paketschließfachstation-System zum Versenden und Sammeln von Sendungen (130) durch einen Agenten (406), wie etwa einen Frachtagenten, sowie zum Abgeben und Abholen von Sendungen (130, 405) durch einen Benutzer (404), das Paketschließfachstation-System umfassend:
eine Station (100, 700) von Schließfächern (110n), umfassend eine Vorderseite, eine Rückseite, eine Steuereinheit (116), eine Benutzeroberfläche (108), die der Vorderseite der Station (100, 700) zugewandt ist und mehrere Schließfächer (110n), die sich jeweils zwischen der Vorderseite und der Rückseite der Station (100, 700) erstrecken und jeweils zum Aufbewahren einer Sendung (130) eingerichtet sind, jedes Schließfach (110n) umfassend ein an der Rückseite der Station (100, 700) geöffnetes Fach, das an der Vorderseite der Station (100, 700) durch eine individuell elektronisch gesteuerte Tür (112n) geschlossen ist,
ein entferntes Versandsystem (407), umfassend eine Paketabwicklungsanwendung (430) und das über ein erstes Fernkommunikationsnetz (408) und mit einer mobilen Vorrichtung (420) des Agenten über ein zweites Fernkommunikationsnetz (422) mit der Station (100, 700) kommuniziert,
wobei das Fach von jedem Schließfach (110n) an der Rückseite der Station (100, 700) geöffnet ist und die Rückseite der Paketschließfachstation nur aus einem eingeschränkten Bereich eines Postraums zugänglich ist, wobei die Station (100, 700) konstruiert ist, um nur dem Agenten Zugang zu ihrer Rückseite zu geben, während ein Zugang zu ihrer Vorderseite sowohl dem Benutzer als auch dem Agenten gegeben wird,
dass die Steuereinheit (116) konfiguriert ist, um die Türen (112n) an der Vorderseite der Station zu öffnen, um ein Versenden, Sammeln, Abgeben und Abholen der Sendungen (130, 405) zu ermöglichen, und
wobei die Paketabwicklungsanwendung (430) zu Folgendem konfiguriert ist:
- Senden von Daten an die mobile Vorrichtung (420) des Agenten, um ihn durch das Versenden und Sammeln von Sendungen (130) von der Rückseite zu führen, und
- Erhalten von Daten von der mobilen Vorrichtung (420) des Agenten, um zu verifizieren, dass der Agent beim Versenden und Sammeln keinen Fehler gemacht hat, über einen Austausch in Echtzeit mit der mobilen Vorrichtung (420) des Agenten (406) über das erste Fernkommunikationsnetz, während Sendungen (130) von der Rückseite der Station (100, 700) versendet und/oder gesammelt werden, und
- nach Einleiten eines Versende- oder Sammelvorgangs von der Rückseite der Station (100, 700)
• Herstellen und Aufrechterhalten einer offenen Kommunikationssitzung zwischen der mobilen Vorrichtung (420) des Agenten (406) und dem entfernten Versandsystem (407) während der gesamten Dauer des Versende- oder Sammelvorgangs, und
• Senden einer Deaktivierungsnachricht an die Steuereinheit (116), um einen Zugang von der Vorderseite der Station (100, 700) für ein Versenden oder ein Sammeln durch einen Agenten (406) oder für ein Abgeben durch einen Benutzer (404) zu sperren, während ein Abholen einer Sendung durch einen Benutzer (404) zugelassen wird.

2. Paketschließfachstation-System nach Anspruch 1, wobei die Paketabwicklungsanwendung für das Versenden oder das Sammeln einer ersten Sendung (130) an der Rückseite der Station (100, 700) während eines Abholens einer zweiten Sendung (405) von der Vorderseite der Paketschließfachstation konfiguriert ist.

3. Paketschließfachstation-System nach einem der Ansprüche 1 oder 2, wobei die Paketabwicklungsanwendung konfiguriert ist, um einen Zugang zu den Schließfächern (110n) von der Vorderseite der Station für ein Versenden durch einen Frachtagenten oder für ein Abgeben durch den Benutzer zu sperren, während eine Sendung (130) in das Schließfach von der Rückseite der Station versendet wird, und einen Zugang zu den Schließfächern (110n) von der Vorderseite der Station zum Sammeln einer Sendung durch einen Frachtagenten zu sperren, während eine Sendung (130) von der Rückseite der Station gesammelt wird.

4. Paketschließfachstation-System nach einem der Ansprüche 1 bis 3, wobei die Station (100, 700) mindestens ein standardmäßige Schließfach (730n) umfasst, das mit einer elektronisch gesteuerten Tür (112n) versehen ist, die an der Vorderseite der Station (100, 700) angebracht ist und an der Rückseite der Station (100, 700) durch eine Rückwand geschlossen ist, wobei das standardmäßige Schließfach dazu verwendet wird, Sendungen nur von der Vorderseite der Station (100, 700) aus zu versenden, zu sammeln, abzugeben und abzuholen, wobei die Paketabwicklungsanwendung (130) konfiguriert ist, um einen Zugang zu dem standardmäßige Schließfach (730n) von der Vorderseite der Station immer zuzulassen, während Sendungen (130) von der Rückseite der Station (100, 700) versendet und oder gesammelt werden.

5. Paketschließfachstation-System nach einem der Ansprüche 1 bis 4, wobei eine Schließfachkennung (220n) auf oder neben dem Schließfach (110n) angebracht ist und ein Kennzeichnungsetikett (132) der Sendung (130) an der Sendung (130) angebracht ist, wobei die Paketabwicklungsanwendung konfiguriert ist, um von der mobilen Vorrichtung (420) des Agenten eine Erfassung des Kennzeichnungsetiketts (132) und der Schließfachkennung (220n) anzufordern und zu erhalten, die Erfassung des Kennzeichnungsetiketts (132) der Sendung in einem ersten Speicherbereich (434) des entfernten Versandsystems (407) zu speichern und die Schließfachkennung (220n) in einem zweiten Speicherbereich (436) des entfernten Versandsystems (407) zu speichern, und den ersten Speicherbereich (434) mit dem zweiten Speicherbereich (436) zu assoziieren, wobei die mobile Vorrichtung (420) des Agenten eine Scan-Komponente (450) umfasst oder damit assoziiert ist und konfiguriert ist, um die Scan-Komponente zum Erfassen von Kennzeichnungsetiketten (132) und Schließfachkennungen (220n) zu verwenden.

6. Paketschließfachstation-System nach einem der Ansprüche 1 bis 5, wobei die Paketabwicklungsanwendung (430) konfiguriert ist, infolge eines Versendens einer Sendung (130) an der Rückseite eines Schließfachs (110n) der Station (100, 700) einen Autorisierungscode (414) zu erzeugen und den Autorisierungscode zum Speichern in einem lokalen Speicher (410) an die Steuereinheit (106) der Station (100, 700) zu senden, wobei die Steuereinheit (106) konfiguriert ist, um einem Benutzer (404) Zugang zu dem Schließfach (110n) zum Abholen der Sendung (130, 405) zu gewähren, indem der in dem lokalen Speicher gespeicherte Autorisierungscode mit von dem Benutzer bereitgestellten Berechtigungsnachweisen verglichen wird.

7. Paketschließfachstation-System nach einem der Ansprüche 1 bis 6, wobei die mobile Vorrichtung (420) des Agenten (406) konfiguriert ist, um eine Kommunikation mit dem entfernten Versandsystem (407) herzustellen.

8. Paketschließfachstation-System nach einem der Ansprüche 4 bis 7, wobei die Station (100, 700) Folgendes umfasst:
- eine rückseitig beladbare Spalte (119, 710, 712, 714) mit mindestens einem an der Rückseite der Station (100, 700) geöffneten Schließfach,
- eine rückseitig beladbare Steuerspalte (118), die die Steuereinheit (116) und die Benutzeroberfläche (108) sowie mindestens ein an der Rückseite der Station (100, 700) geöffnetes Schließfach (110n) umfasst, und
- eine Standardspalte (720, 722, 724, 726) mit mindestens einem standardmäßigen Schließfach, das an der Rückseite der Station (100, 700) durch eine Rückwand geschlossen ist,
wobei die Rückseite der Station (100, 700) von Schließfächern durch mindestens eine rückseitige Tür geschlossen ist, wobei die rückseitige Tür Abmessungen aufweist, die es erlauben, mindestens zwei Schließfächer an der Rückseite der Station (100, 700) zu schließen.

9. Verfahren unter Verwendung einer Paketschließfachstation (100, 700) zum Versenden, Sammeln, Abgeben und Abholen von Sendungen (130), wobei die Paketschließfachstation (100, 700) eine Vorderseite und eine Rückseite aufweist und eine Benutzeroberfläche (108) und mindestens ein Schließfach (110n) umfasst, das mit einer elektronisch gesteuerten Tür (112n) versehen ist, die an der Vorderseite der Station angebracht und an der Rückseite der Station geöffnet ist, um Zugang zum Versenden und Sammeln von Sendungen (130) von der Rückseite der Station zu gewähren, wobei die Paketschließfachstation (100, 700) über ein erstes Fernkommunikationsnetz (408) mit einem entfernten Versandsystem (407) kommuniziert und das entfernte Versandsystem (407) mit einer mobilen Vorrichtung (420) über ein zweites Fernkommunikationsnetz (422) kommuniziert, wobei die Paketschließfachstation (100, 700) ein Versenden, ein Sammeln, ein Abgeben oder ein Abholen an der Vorderseite durch einen Agenten oder einen Benutzer unter Verwendung der Benutzeroberfläche (108) zum Zusammenwirken mit den Schließfächern (110n) der Station steuert, und wobei das entfernte Versandsystem (407) die Paketschließfachstation teilweise steuert und das Versenden oder das Sammeln von der Rückseite der Station durch einen Agenten (406) über die mobile Vorrichtung verwaltet, das Verfahren ferner umfassend:
- Herstellen und Aufrechterhalten, durch die Paketabwicklungsanwendung (430), einer offenen Kommunikationssitzung mit der mobilen Vorrichtung (420) während der Dauer eines Versende- oder Sammelvorgangs von der Rückseite, und
- Senden, durch die Paketabwicklungsanwendung (430) an die Steuereinheit (116), einer Sperrnachricht, um einen Zugang von der Vorderseite für ein Versenden oder ein Abgeben zu sperren, während ein Abholen durch einen Benutzer während des Vorgangs zugelassen ist.

10. Verfahren nach Anspruch 9, das Verfahren umfassend:
- Auswählen eines Versendens der ersten Sendung (130) von der Rückseite der Station aus unter Verwendung der mobilen Vorrichtung (420) als lokale Schnittstelle für das entfernte Versandsystem (407), und
- Versenden der ersten Sendung (130) an der Rückseite der Paketschließfachstation, während eine zweite Sendung (405) von der Vorderseite der Paketschließfachstation abgeholt wird.

11. Verfahren nach Anspruch 10, ferner umfassend ein Sperren eines Zugangs zu dem Schließfach (110n) von der Vorderseite der Paketschließfachstation für ein Versenden durch einen Frachtagenten (406) und für ein Abgeben durch einen Benutzer (404), wenn die Sendung (130) von der Rückseite der Paketschließfachstation versendet wird.

12. Verfahren nach Anspruch 10 oder 11, ferner umfassend:
- Erfassen eines Kennzeichnungsetiketts (132) der Sendung (130), und
- Erfassen einer Schließfachkennung (220n) des Schließfachs (110n)
- Versenden der Sendung (130) in das Schließfach (110n) von der Rückseite der Station aus,
- Speichern des erfassten Kennzeichnungsetiketts (132) der Sendung (130) und der erfassten Schließfachkennung (220n) in dem entfernten Versandsystem (407),
- Assoziieren des gespeicherten Kennzeichnungsetiketts (132) der Sendung (130) und der gespeicherten Schließfachkennung (220n),
- nach Erfassen der Kennzeichnung (132) der Sendung (130) und Erfassen der Schließfachkennung (220n) Verifizieren, ob ein Status des Schließfachs 110n nicht akzeptabel ist, einschließlich eines nicht akzeptablen Status, weil es verschmutzt oder funktionsunfähig oder geöffnet oder voll ist,
- wenn der Status des Fachs nicht akzeptabel ist, Vorschlagen auf der mobilen Vorrichtung (420), die Sendung (130) zu versenden und das Versenden zu speichern, bevor das Versenden der Sendung (130) abgeschlossen wird, und
- wenn der Status des Fachs nicht akzeptabel ist, Anzeigen eines Fehlers auf der mobilen Vorrichtung (420).

13. Verfahren nach einem der Ansprüche 9 bis 12, ferner umfassend:
- nach Versenden der Sendung (130) Erzeugen eines Autorisierungscodes (414) durch das entfernte Versandsystem zur Verwendung durch einen Empfänger der Sendung (130) zum Abholen der Sendung aus dem Fach (110n),
- Senden des Autorisierungscodes an die Paketschließfachstation,
- Speichern des Autorisierungscodes in der Paketschließfachstation, und
- Validieren einer Zugangsanforderung des Benutzers basierend auf dem in der Paketschließfachstation gespeicherten Autorisierungscode.

14. Verfahren nach einem der Ansprüche 9 bis 13, ferner umfassend:
- Auswählen eines Sammelns, einer ersten Sendung (130) aus dem Schließfach (110n) von der Rückseite der Station aus unter Verwendung der mobilen Vorrichtung (420) als lokale Schnittstelle für das entfernte Versandsystem (407), und
- Abholen einer zweiten Sendung (130, 405) der Paketschließfachstation von der Vorderseite der Station, während die erste Sendung (130) von der Rückseite der Paketschließfachstation gesammelt wird.
- Sperren eines Zugangs von der Vorderseite der Paketschließfachstation zu dem Fach (110n) für ein Sammeln durch einen Agenten während eines Sammelns einer Sendung (130) von der Rückseite der Paketschließfachstation.

15. Verfahren nach Anspruch 13 oder 14, ferner umfassend:
- Auswählen eines Frachtführers aus einer Liste von Frachtführern (438), die auf der mobilen Vorrichtung (420) angezeigt und in dem entfernten Versandsystem (407) gespeichert ist,
- Anzeigen einer in dem entfernten Versandsystem (407) gespeicherten Liste von zu sammelnden Sendungen (440) auf der mobilen Vorrichtung (420), die dem ausgewählten Frachtführer entspricht,
- Erfassen des Kennzeichnungsetiketts (132) der zu sammelnden Sendung (130),
- oder alternativ Erfassen der Schließfachkennung (220n),
- Entnehmen der Sendung (130) aus dem Fach (110n), und
- Beenden eines Anzeigen der Sendung in der Liste von Sendungen zum Sammeln auf der mobilen Vorrichtung (420).

## Revendications

1. Système de banque de casiers de colis pour la distribution et la collecte de colus (130) par un agent (406), tel qu'un agent transporteur, ainsi que pour le dépôt et le retrait de colis (130, 405) par un utilisateur (404), le système de banque de casiers de colis comprenant :
une banque (100, 700) de casiers (110n) comprenant une face avant, une face arrière, une unité de commande (116), une interface utilisateur (108) orientée vers la face avant de la banque (100, 700), et plusieurs casiers (110n) s'étendant chacun entre ladite face avant et ladite face arrière de la banque (100, 700) et configuré chacun pour stocker un colis (130),
chaque casier (110n) comprenant un compartiment ouvert sur la face arrière de la banque (100, 700), fermé sur la face avant de la banque (100, 700) par une porte individuelle à commande électronique (112n),
un système d'expédition à distance (407) comprenant une application de traitement de colis (430) et communiquant avec la banque (100, 700) via un premier réseau de communication longue distance (408), et avec un dispositif mobile (420) de l'agent via un deuxième réseau de communication longue distance (422),
le compartiment de chaque casier (110n) est ouvert sur la face arrière de la banque (100, 700) et la face arrière de la banque de casiers n'est accessible que depuis une zone restreinte d'un local de courrier, la banque (100, 700) étant conçue pour donner accès à sa face arrière uniquement à l'agent tandis que l'accès à sa face avant est donné à la fois à l'utilisateur et à l'agent,
en ce que l'unité de commande (116) est configurée pour ouvrir les portes (112n) sur la face avant de la banque afin de permettre la distribution, la collecte, le dépôt et le retrait des colis (130, 405), et
l'application de traitement de colis (430) est configurée :
- pour envoyer des données au dispositif mobile (420) de l'agent afin de le guider à travers la distribution et la collecte de colis (130) depuis la face arrière et
- pour recevoir des données du dispositif mobile (420) de l'agent afin de vérifier que l'agent n'a commis aucune erreur dans la distribution et la collecte via un échange en temps réel avec le dispositif mobile (420) de l'agent (406) à travers le premier réseau de communication longue distance pendant que des colis (130) sont distribués et/ou collectés depuis la face arrière de la banque (100, 700), et
- pour, lors de l'initiation d'un processus de distribution ou de collecte depuis la face arrière de la banque (100, 700)
• établir et maintenir une session de communication ouverte entre le dispositif mobile (420) de l'agent (406) et le système d'expédition à distance (407) pendant toute la durée dudit processus de distribution ou de collecte, et
• envoyer un message de désactivation à l'unité de commande (116) pour bloquer l'accès depuis la face avant de la banque (100, 700) pour une distribution ou une collecte par un agent (406) ou pour un dépôt par un utilisateur (404), tout en permettant un retrait d'un colis par un utilisateur (404).

2. Système de banque de casiers de colis selon la revendication 1, dans lequel l'application de traitement de colis est configurée pour la distribution ou la collecte d'un premier colis (130) sur la face arrière de la banque (100, 700) pendant un retrait d'un deuxième colis (405) depuis la face avant de la banque de casiers de colis.

3. Système de banque de casiers de colis selon l'une quelconque des revendications 1 ou 2, dans lequel l'application de traitement de colis est configurée pour désactiver l'accès aux casiers (110n) depuis l'avant de la banque pour une distribution par un agent transporteur ou pour un dépôt par l'utilisateur pendant qu'un colis (130) est distribué dans le casier depuis l'arrière de la banque, et pour désactiver l'accès aux casiers (110n) depuis la face avant de la banque pour une collecte d'un colis par un agent transporteur pendant qu'un colis (130) est collecté depuis l'arrière de la banque.

4. Système de banque de casiers de colis selon l'une quelconque des revendications 1 à 3, dans lequel la banque (100, 700) comprend au moins un casier standard (730n) équipé d'une porte à commande électronique (112n) fixée sur la face avant de la banque (100, 700) et fermé par un panneau arrière sur la face arrière de la banque (100, 700), le casier standard étant utilisé pour la distribution, la collecte, le dépôt et le retrait de colis uniquement depuis la face avant de la banque (100, 700), l'application de traitement de colis (130) étant configurée pour toujours autoriser l'accès au casier standard (730n) depuis la face avant de la banque pendant que des colis (130) sont distribués et/ou collectés depuis la face arrière de la banque (100, 700).

5. Système de banque de casiers de colis selon l'une quelconque des revendications 1 à 4, dans lequel un identifiant de casier (220n) est fixé sur ou à côté du casier (110n) et une étiquette d'identification (132) du colis (130) est fixée au colis (130), l'application de traitement de colis étant configurée pour demander et recevoir, du dispositif mobile (420) de l'agent, une capture de l'étiquette d'identification (132) et de l'identifiant de casier (220n), pour stocker la capture de l'étiquette d'identification (132) du colis dans un premier espace de mémoire (434) du système d'expédition à distance (407) et pour stocker l'identifiant de casier (220n) dans un deuxième espace de mémoire (436) du système d'expédition à distance (407), et pour associer le premier espace de mémoire (434) au deuxième espace de mémoire (436), le dispositif mobile (420) de l'agent comprenant ou étant associé à un composant de balayage (450) et est configuré pour utiliser le composant de balayage pour capturer des étiquettes d'identification (132) et des identifiants de casier (220n).

6. Système de banque de casiers de colis selon l'une quelconque des revendications 1 à 5, dans lequel l'application de traitement de colis (430) est configurée pour générer un code d'autorisation (414) à la suite d'une distribution d'un colis (130) dans la face arrière d'un casier (110n) de la banque (100, 700), et envoyer le code d'autorisation à l'unité de commande (106) de la banque (100, 700) pour stockage dans une mémoire locale (410), l'unité de commande (106) étant configurée pour accorder l'accès à un utilisateur (404) audit casier (110n) afin de retirer le colis (130, 405) en comparant le code d'autorisation stocké dans la mémoire locale avec des informations d'identification fournies par l'utilisateur.

7. Système de banque de casiers de colis selon l'une quelconque des revendications 1 à 6, dans lequel le dispositif mobile (420) de l'agent (406) est configuré pour établir une communication avec le système d'expédition à distance (407).

8. Système de banque de casiers de colis selon l'une quelconque des revendications 4 à 7, dans lequel la banque (100, 700) comprend :
- une colonne à chargement par l'arrière (119, 710, 712, 714) avec au moins un casier ouvert sur la face arrière de la banque (100, 700),
- une colonne de commande à chargement par l'arrière (118) comprenant l'unité de commande (116) et l'interface utilisateur (108) et au moins un casier (110n) ouvert sur la face arrière de la banque (100, 700), et
- une colonne standard (720, 722, 724, 726) avec au moins un casier standard fermé sur la face arrière de la banque (100, 700) par un panneau arrière,
la face arrière de la banque (100, 700) de casiers étant fermée par au moins une porte du côté arrière, ladite porte du côté arrière ayant des dimensions permettant de fermer au moins deux casiers sur la face arrière de la banque (100, 700).

9. Procédé utilisant une banque de casiers de colis (100, 700) pour la distribution, la collecte, le dépôt et le retrait de colis (130), dans lequel la banque de casiers de colis (100, 700) a un côté avant et un côté arrière et comprend une interface utilisateur (108) et au moins un casier (110n) équipé d'une porte à commande électronique (112n) fixée sur la face avant de la banque et ouvert sur la face arrière de la banque pour fournir un accès pour la distribution et la collecte de colis (130) depuis la face arrière de la banque, dans lequel la banque de casiers de colis (100, 700) communique avec un système d'expédition à distance (407) via un premier réseau de communication longue distance (408) et le système d'expédition à distance (407) communique avec un dispositif mobile (420) via un deuxième réseau de communication longue distance (422), dans lequel la banque de casiers de colis (100, 700) commande une distribution, une collecte, un dépôt ou un retrait sur la face avant par un agent ou un utilisateur utilisant l'interface utilisateur (108) pour interagir avec les casiers (110n) de la banque, et dans lequel le système d'expédition à distance (407) commande partiellement la banque de casiers de colis et gère la distribution ou la collecte depuis la face arrière de la banque par un agent (406) via le dispositif mobile, le procédé comprenant en outre :
- l'établissement et le maintien, par l'application de traitement de colis (430), d'une session de communication ouverte avec le dispositif mobile (420) pendant la durée d'un processus de distribution ou de collecte depuis la face arrière, et
- le colis, par l'application de traitement de colis (430) à l'unité de commande (116), d'un message de désactivation pour bloquer l'accès depuis la face avant pour une distribution ou un dépôt, tout en permettant un retrait par un utilisateur pendant ledit processus.

10. Procédé selon la revendication 9, le procédé comprenant :
- le choix de distribuer le premier colis (130) depuis la face arrière de la banque en utilisant le dispositif mobile (420) comme interface locale pour le système d'expédition à distance (407), et
- la distribution du premier colis (130) sur la face arrière de la banque de casiers de colis tout en retirant un deuxième colis (405) depuis la face avant de la banque de casiers de colis.

11. Procédé selon la revendication 10, comprenant en outre la désactivation de l'accès au casier (110n) depuis la face avant de la banque de casiers de colis pour une distribution par un agent transporteur (406) et pour un dépôt par un utilisateur (404) lors de la distribution du colis (130) depuis la face arrière de la banque de casiers de colis.

12. Procédé selon les revendications 10 ou 11, comprenant en outre :
- la capture d'une étiquette d'identification (132) du colis (130), et
- la capture d'un identifiant de casier (220n) du casier (110n)
- la distribution, depuis la face arrière de la banque, du colis (130) dans le casier (110n),
- le stockage de l'étiquette d'identification (132) capturée du colis (130) et de l'identifiant de casier (220n) capturé dans le système d'expédition à distance (407),
- l'association de l'étiquette d'identification (132) stockée du colis (130) et de l'identifiant de compartiment (220n) stocké,
- à la suite de la capture de l'identification (132) du colis (130) et de la capture de l'identifiant de casier (220n), le fait de vérifier si un état du casier (110n) est non acceptable, comprenant un état non acceptable du fait qu'il est sale ou dysfonctionnel ou ouvert ou plein,
- si l'état du casier n'est pas non acceptable, la proposition sur le dispositif mobile (420) de distribuer le colis (130) et d'enregistrer la distribution, avant de terminer la distribution du colis (130), et
- si l'état du compartiment est non acceptable, l'affichage d'une erreur sur le dispositif mobile (420).

13. Procédé selon l'une quelconque des revendications 9 à 12, comprenant en outre :
- à la suite de la distribution du colis (130), la génération par le système d'expédition à distance, d'un code d'autorisation (414) à utiliser par un destinataire du colis (130) pour retirer le colis depuis le compartiment (110n),
- le colis du code d'autorisation à la banque de casiers de colis,
- le stockage du code d'autorisation dans la banque de casiers de colis,
et
- la validation d'une demande d'accès de l'utilisateur sur la base du code d'autorisation stocké dans la banque de casiers de colis.

14. Procédé selon l'une quelconque des revendications 9 à 13, comprenant en outre :
- le choix de collecter, depuis la face arrière de la banque, un premier colis (130) à partir du casier (110n) en utilisant le dispositif mobile (420) comme interface locale pour le système d'expédition à distance (407), et
- le retrait, depuis la face avant de la banque, d'un deuxième colis (130, 405) de la banque de casiers de colis tout en collectant le premier colis (130) depuis la face arrière de la banque de casiers de colis,
- la désactivation de l'accès depuis l'avant de la banque de casiers de colis au compartiment (110n) pour une collecte par un agent pendant une collecte d'un colis (130) depuis la face arrière de la banque de casiers de colis.

15. Procédé selon la revendication 13 ou 14, comprenant en outre :
- la sélection d'un transporteur dans une liste de transporteurs (438) affichée sur le dispositif mobile (420) et stockée dans le système d'expédition à distance (407),
- l'affichage, sur le dispositif mobile (420), d'une liste de colis à collecter (440) stockée dans le système d'expédition à distance (407) et correspondant au transporteur sélectionné,
- la capture de l'étiquette d'identification (132) de colis (130) à collecter,
- ou en variante la capture de l'identifiant de casier (220n),
- le retrait du colis (130) du compartiment (110n), et
- l'arrêt de l'affichage du colis dans la liste des colis à collecter sur le dispositif mobile (420).
